# FASCICULE DE BREVET EUROPEEN

(11) **EP 4 623 030 B1**
(45) Date de publication et mention de la délivrance du brevet: **04.11.2026**
(21) Numéro de dépôt: 23824949.4
(22) Date de dépôt: 21.11.2023
(51) Int. Cl.: C08L 67/02

(54) **DISPOSITIF DE DISTRIBUTION COMPRENANT UNE COMPOSITION POLYESTER**
AUSGABEVORRICHTUNG MIT EINER POLYESTERZUSAMMENSETZUNG
DISPENSING DEVICE COMPRISING A POLYESTER COMPOSITION

(30) Priorité: 22.11.2022 FR 2212160
(43) Date de publication de la demande: 01.10.2025
(73) Titulaire: APTAR France SAS, 27110 Le Neubourg (FR)
(72) Inventeur: BLACHE, Héloïse, 76000 ROUEN (FR); LÉONÉ, Patrice, 27400 ACQUIGNY (FR)
(74) Mandataire: CAPRI
(86) Numéro de dépôt international: PCT/FR2023/051829
(87) Numéro de publication internationale: WO 2024/110727

(56) Documents cités:
- EP-A1- 1 054 038
- EP-A2- 0 437 942
- CA-A- 1 200 798
- US-A1- 2013 303 660

## Description

### Domaine technique

La présente invention utilise une composition polyester à base de polyéthylène téréphtalate (PET) ou similaire, à la place des polyoléfines (polyéthylène (PE) ou polypropylène (PP)), pour la fabrication de dispositifs de distribution pour l'industrie de l'emballage, destinés à être montés sur des bouteilles, des tubes et des pots destinés à l'industrie de l'emballage. Les domaines d'application privilégiés sont ceux de l'alimentaire, des produits d'entretien, des soins personnels, de la pharmacie, de la cosmétique.

### Contexte de l'invention

L'économie circulaire des emballages plastiques entraîne un besoin de concevoir des systèmes d'emballage mono matériaux, c'est-à-dire dont les différents composants sont constitués de matériaux polymères compatibles ou de même famille chimique afin d'optimiser leur recyclage. A ce jour, la majorité des bouchons et dispositifs de distribution du marché, destinés à être utilisés sur des récipients en PET, tels que, par exemple les bouteilles, les tubes ou les pots, sont soit constitués de composants multi matériaux, soit de composants mono matériaux à base polyoléfines, tels que le polyéthylène ou le polypropylène. A notre connaissance, à ce jour, aucun dispositif de distribution mono matériau à base de polyester destiné aux récipients en PET n'a encore été décrit dans la littérature. CA 1 200 798 A divulgue un dispositif de distribution de fluide comprenant essentiellement du PET.

### • Description du PET

Le polyéthylène téréphtalate ou PET est un polyester thermoplastique semi-cristallin obtenu par polycondensation de deux monomères : l'acide téréphtalique et l'éthylène glycol comme le montre la formule 1 ci-dessous. Ses principales propriétés sont l'imperméabilité aux gaz et aux liquides, la résistance chimique, la rigidité et la transparence.

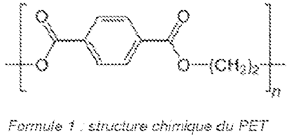

Le PET est couramment utilisé dans divers domaines d'application : l'emballage (bouteilles d'eau et de boissons gazeuses, plateaux à fruits, flacons de produits cosmétiques...), l'automobile (poignées de porte de voiture, éléments de garniture intérieure, bouches d'aération), l'électronique (douilles, supports de lampe, boîtes à fusibles). Outre les propriétés mentionnées ci-dessus, le PET est actuellement le plastique le plus recyclé et constitue donc un bon candidat pour l'économie circulaire.

### • Comparaison avec d'autres polymères

Le tableau 1 ci-dessous compare les propriétés du PET à celles d'autres polymères tels que le polypropylène ou le polyéthylène et l'ABS.

**Tableau 1 : Comparaison des propriétés mécaniques des types de plastique utilisés par l'industrie de l'emballage**

| **Propriétés** | **Unités** | **Polyéthylène téréphtalate (PET)** | **Polypropylène (PP)** | **Polyéthylène haute densité (HDPE)** | **Acrylonitrile butylène styrène (ABS)** |
|---|---|---|---|---|---|
| **PHYSIQUES** | | | | | |
| Densité | | 1.38 | 0.9 | 0.95 | 1.05 |
| Perméabilité à l' O₂ (à 1atm, 20°C) | mL.m²/day | 10 à 100 | >1000 | >1000 | Pas de données |
| Absorption d'eau (24h) | % | 0.1 - 0.2 | 0.01 - 0.1 | 0.005 - 0.01 | 0.2 - 0.6 |

| **MECANIQUES** | | | | | |
|---|---|---|---|---|---|
| Dureté | Shore D | 83 | 67 - 74 | 63 - 67 | 75 |
| Module de traction | MPa | 2300 - 2800 | 1000 - 1600 | 500 - 1100 | 1600 - 2600 |
| Résistance à l'impact Charpy (entaillé) | kJ/m² | 3 | 4 - 20 | 4 | 20 |

Par rapport aux polyoléfines (PP ou PE), le PET présente les avantages suivants :
- Propriétés de barrière aux gaz
- Bonne résistance chimique et thermique

En plus des avantages mentionnés ci-dessus, il présente d'autres avantages, mais aussi quelques inconvénients résumés dans le tableau 2 ci-dessous :

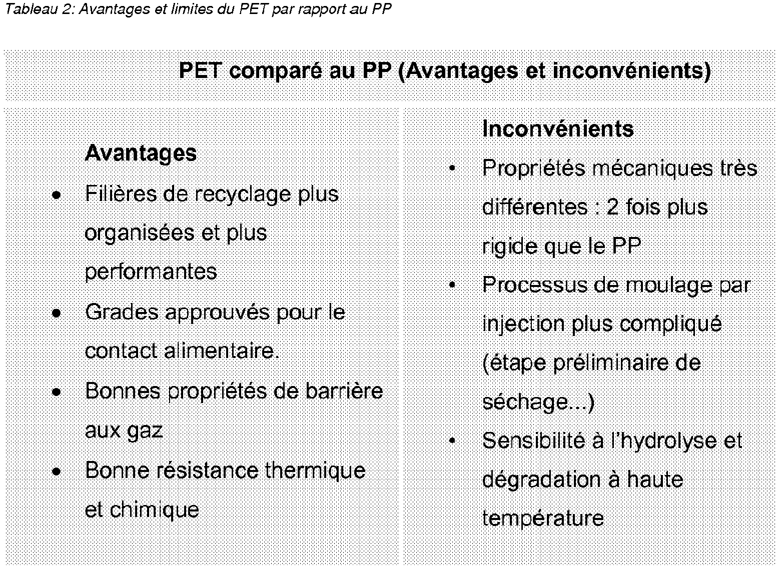

Malgré ses propriétés intéressantes et son effet positif dans l'économie circulaire, il est clair que le PET pur ne pourrait pas être utilisé pour remplacer les polyoléfines, comme l'illustre le tableau 1.

C'est un objet de la présente invention de fournir de nouvelles compositions thermoplastiques destinées principalement, mais sans s'y limiter, au moulage par injection et ayant une dureté plus faible, un module de traction plus faible, une résistance à l'impact plus élevée, et une viscosité à l'état fondu plus faible par rapport au PET pur, et rapprochant ces propriétés de celles du PP tout en maintenant la recyclabilité du PET obtenu dans le flux de recyclage régulier du PET. Un autre objet de la présente invention est de fournir un panel de formulations de matériaux polyesters dans lequel on pourra sélectionner un matériau dont les propriétés sont adaptables aux besoins de la conception et de fabrication de composants de dispositifs de distribution pour l'industrie de l'emballage, spécifiquement destinés à être utilisés sur des récipients distribués par l'industrie de l'emballage, et pouvant être produits à base de PET ou de co-polyester.

### Résumé des objets et de l'invention

Pour remplir ces objets, la présente invention propose un dispositif de distribution destiné à être monté sur un récipient pour constituer un distributeur de produit fluide, le dispositif de distribution étant essentiellement constitué à partir d'une composition de polyester consistant essentiellement en un mélange des composants A et B définis comme suit:
A : un élastomère de copolyéther ester (COPE) constitué essentiellement de segments durs de polyester et de segments mous de polyéther aliphatique et ayant une dureté inférieure à 50 shore D, et
B : un polyéthylène téréphtalate (PET) ou un co-polyester, ou un mélange des deux.

L'invention définit ainsi un dispositif de distribution, tel qu'un bouchon, un applicateur, ou plus généralement un dispositif de distribution monobloc, destiné à être monté sur ou associé à un récipient en polyester pour constituer un distributeur de produit fluide, le dispositif de distribution étant essentiellement constitué à partir de la composition de polyester définie ci-dessus, essentiellement constituée de A et de B.

Un produit fluide est ici défini comme toute substance pouvant s'écouler, et comprend donc les produits sous forme liquide, et les solides pulvérulents ou en granulés.

La présente invention propose également un dispositif de distribution destiné à être monté sur un récipient pour constituer un distributeur de produit fluide, le dispositif de distribution étant exempt de polyoléfine et comprenant plusieurs éléments, au moins un élément étant essentiellement constitué à partir d'une composition de polyester consistant essentiellement en un mélange des composants A et B définis comme suit :
A : un élastomère de copolyéther ester (COPE) constitué essentiellement de segments durs de polyester et de segments mous de polyéther aliphatique et ayant une dureté inférieure à 50 shore D, et
B : un polyéthylène téréphtalate (PET) ou un co-polyester, ou un mélange des deux, tous les autres éléments étant réalisés à partir du composant A ou B.

L'invention définit ainsi un dispositif de distribution multi-éléments, telle qu'une pompe ou une valve, destiné à être monté sur ou associé à un récipient en polyester pour constituer un distributeur de produit fluide, le dispositif de distribution étant exempt de polyoléfine, au moins un élément étant essentiellement constitué à partir de la composition de polyester définie ci-dessus, essentiellement constituée de A et de B, tous les autres éléments étant réalisés à partir du composant A ou B.

La présence d'additifs fonctionnels n'est pas exclue dans la composition de polyester, qui reste dans tous les cas, essentiellement constituée de A et de B.

Avantageusement, le co-polyester est obtenu par la polymérisation d'au moins un acide choisi parmi l'acide téréphtalique, l'acide 2,5-furandicarboxylique ou l'acide isophthalique avec un alcool choisi parmi l'éthylène glycol, le cyclohexanediméthanol, le triméthylène glycol et l'isosorbide ou du recyclage d'un polymère composé de ces monomères.

Le co-polyester peut être le polyéthylène téréphtalate modifié par un glycol (PETG).

Le co-polyester peut aussi être choisi parmi le poly cyclohexylènediméthylène modifié par du téréphtalate de glycol (PCTG), le polycyclohexylène dimethylene téréphtalate modifié acide (PCTA), le Polyethylene co-Isosorbide Terephthalate (PEIT) et le polyéthylène furanoate (PEF). On peut envisager des mélanges de plusieurs co-polyester parmi le PETG, PCTG, PCTA, PEIT et PEF. L'utilisation d'une matière première dite « recyclée », par un procédé mécanique ou chimique, et correspondant aux caractéristiques citées précédemment pourra également être envisagée.

Selon une autre caractéristique de l'invention, le composant A est présent dans un rapport massique de 0,5% à 40%, avantageusement de 1 % à 30 % et de préférence de 5 % à 15 %, et le composant B est présent dans un rapport massique de 60% à 99,5%, avantageusement de 70% à 99 % et de préférence de 85 % à 95 %.

Selon un autre aspect de l'invention, dans le composant A, le segment dur du polyester peut être constitué d'unités de téréphtalate de butylène. On peut aussi envisager de remplacer le téréphtalate de butylène par le téréphtalate d'éthylène, sans sortir du cadre de l'invention.

La composition obtenue par l'ajout de l'élastomère (COPE) à la matrice de polyester (PET ou similaire) présentera un module de traction inférieur, une dureté inférieure, une résistance au choc améliorée et une meilleure viscosité à l'état fondu par rapport à une matrice de polyester pur (PET par exemple) ou par rapport au polypropylène, ce qui le rendra mieux adapté à la mise en œuvre, notamment, mais sans s'y limiter par injection-moulage, et aux conceptions de systèmes de distribution destinés à être utilisés sur des récipients en polyester, pouvant également être issus d'une filière de recyclage.

L'invention définit par ailleurs un distributeur de produit fluide comprenant un dispositif de distribution monobloc ou multi-éléments, tel que défini ci-dessus. Avantageusement, le distributeur de produit fluide comprend un récipient réalisé à partir du composant B, sur lequel le dispositif de distribution est monté pour distribuer le produit fluide contenu dans le récipient. Alternativement, le récipient peut être réalisé en polyester ou en polyoléfine. En variante, il peut également être réalisé en verre, en métal, en céramique, etc.

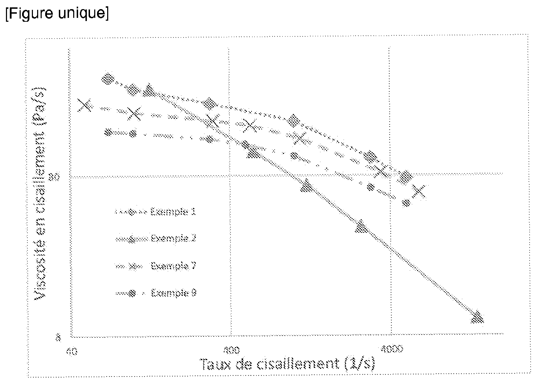

[Figure unique] La figure unique est un graphe représentant les courbes du comportement rhéo-fluidifiant mesuré par rhéomètre capillaire à 275°C pour les échantillons 1, 4 et 9, et à 205°C pour l'échantillon 2.

### Description Détaillée

La présente invention concerne une composition de polyester que l'on peut utiliser dans un procédé de mise en forme approprié aux plastiques, en moulage par injection par exemple. Un mélange préliminaire au moyen d'une unité de compoundage ou d'extrusion peut ou non être effectué avant d'utiliser le mélange de polyester dans une presse à injection, un procédé d'injection soufflage, d'extrusion, d'extrusion-soufflage, de calandrage ou de thermoformage, ou tout moyen approprié à la transformation et la mise en œuvre de polymères. Un séchage approprié à un taux inférieur à 0,05% en masse sera préférablement effectué avant tout traitement à haute température des matériaux en polyester.

La matrice polyester principale sera un polyéthylène téréphtalate (PET) ou un copolyester obtenu par la polymérisation d'acide téréphtalique, d'acide 2,5-furandicarboxylique ou d'acide isophtalique avec de l'éthylène glycol, le cyclohexanediméthanol, le triméthylène glycol ou l'isosorbide. De tels copolyesters comprennent des matériaux connus par l'homme de l'art sous leurs acronymes : PETG, PCTG, PCTA, PEIT, PEF, etc. De tels polyesters peuvent être utilisés pour la fabrication de récipients, bouteilles, tubes et pots, généralement destinés à la grande distribution et à l'industrie de l'emballage. Cette matrice polyester pourra également être issues d'une filière de recyclage, sa composition chimique satisfaisant toujours aux critères cités précédemment.

Un élastomère de l'une des familles décrites ci-après sera mélangé à la matrice principale de polyester, en une quantité comprise entre 0,5 et 40 % en masse, avantageusement entre 1 % à 30 % et de préférence de 5 % à 15 %. Cet élastomère a de préférence une dureté Shore D inférieure à 50 unités, et fait partie de la famille des élastomères polyester-éther (COPE), qui sont des élastomères copolymères thermoplastiques, pour lesquels les blocs de construction sont liés entre eux par des liaisons chimiques ester, et formés de deux phases microstructurales :
Phase rigide (segments rigides à base ester) : Polymère sous forme cristalline qui assure la cohésion et la résistance du matériau. La phase rigide du COPE sera le plus souvent du PBT (polybutylène téréphtalate), mais peut aussi être des segments durs de PET (polyéthylène téréphtalate).
Phase souple (segments souples base éther) : Polymère à l'état caoutchouteux qui donne au matériau son caractère élastomère, le plus souvent un polyéther glycol tel que, mais sans s'y limiter, le polytétraméthylène éther glycol (PTMEG) ou le polyéthylène glycol.

Il faut noter que le COPE peut être remplacé, selon le type d'application et les propriétés recherchées, par de l'une des trois familles chimiques suivantes :

### 1) Les élastomères de polyuréthane thermoplastique (TPU)

Les TPU ont une microstructure similaire à celle du COPE. Ce sont des matériaux dont les liaisons entre les blocs de construction sont des liaisons uréthane et formés de deux phases microstructurales :
La phase rigide (segment rigide à base polyuréthane) : Polymère sous forme cristalline qui assure la cohésion et la résistance du matériau. La phase rigide du TPU est le plus souvent, mais pas exclusivement, composée de méthylène diisocyanate (MDI) ou de toluène diisocyanate (TDI) associé à une molécule de diol allongeur de chaîne, le plus souvent, mais pas exclusivement, le butanediol (BDO).
Phase souple (segment souple à base éther ou base polyester) : Polymère à l'état caoutchouteux qui confère au matériau son caractère élastomère, qui peut être un polyéther glycol, tel que, mais sans s'y limiter, le PTMEG (polytétraméthylène éther glycol), ou un macrodiol à base de polyester aliphatique tel que, mais sans s'y limiter, la polycaprolactone ou le polybutylène succinate (PBS).

### 2) Les élastomères de polyether amide (COPA)

Les COPA sont des élastomères copolymères thermoplastiques dont les liaisons entre les blocs de construction sont des liaisons amides et sont formées de deux phases microstructurales:
Phase rigide (segment rigide à base polyamide) : Polymère sous forme cristalline qui assure la cohésion et la résistance du matériau. La phase rigide du COPA est le plus souvent le polyamide 12, obtenu, de manière non limitative, par polycondensation de l'acide aminolaurique ou ouverture de cycle du laurolactame.
Phase souple (segment souple à base éther) : Polymère à l'état caoutchouteux qui confère au matériau son caractère élastomère, qui peut être un polyéther glycol, tel que le PTMEG (Polytetramethylene Ether Glycol), mais pas seulement.

### 3) Les glycols aussi appelés polyéthers aliphatiques

Le polyéthylène glycol (PEG) ou le polytétrahydrofurane (PTMEG) sont des molécules flexibles ayant la structure chimique suivante :

### Exemple de structure chimique des glycols (ici le polyéthylène glycol)

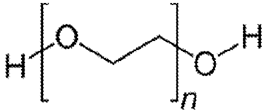

On préférera utiliser dans le mélange des produits dont la masse molaire moyenne est d'au moins 4000 g/mol, afin de minimiser la migration dans les produits contenus par le distributeur.

### Exemples

### • Procédures d'essai

Mise en œuvre : Les formulations de matières premières ont d'abord été mélangées sous forme de granulés dans les proportions appropriées, puis ont été séchées pendant 6h à 120°C avant tout processus de transformation à haute température. Les mélanges de granulés séchés ont ensuite été soit moulés par injection pour former des échantillons en forme d'haltères afin de procéder à des tests mécaniques, soit mélangés par extrudeuse et transformés en granulés afin de procéder à des tests rhéologiques.

Mesure de la densité : La mesure de la densité a été effectuée selon les instructions de la méthode A de la norme ISO 1181 au moyen d'une balance équipée d'un kit de mesure de la densité en fil métallique.

Essais mécaniques : Suivant la norme ISO 527, des haltères A1 ont été utilisés pour mesurer les propriétés de traction des différents exemples présentés ci-dessous, obtenues à une vitesse de traction de 50 mm/min. Les valeurs de résistance à l'impact ont été obtenues en suivant la norme ISO 79. Les valeurs de dureté ont été obtenues en suivant la procédure ISO 868.

Essai rhéologique : Les courbes de viscosité à l'état fondu en fonction du taux de cisaillement ont été obtenues via un rhéomètre capillaire, et mesurées à une température de 275°C. Tous les échantillons sous formes de granulés ont été séchées à 120°C pendant 6h avant la mesure.

### • Résultats

*Exemple 1* : Dans cet exemple, un échantillon témoin constitué de 100% de PET, issu de la polymérisation d'acide téréphtalique et d'éthylène glycol, avec une viscosité IV de 0,8 dL/g, qui est considéré comme "grade bouteille" par l'industrie de l'emballage, a été séché pendant 6h à 120°C, avant d'être moulé par injection en formes haltère A1 pour les tests mécaniques. Les granulés séchés de ce matériau ont également été mélangés au moyen d'une extrudeuse pour obtenir des granulés traités. Cet exemple a été inclus dans le présent document uniquement à des fins de comparaison avec les exemples suivants. Les propriétés mécaniques et la courbe de comportement rhéo-fluidifiant à l'état fondu peuvent être trouvés dans le tableau 3 et le graphe ci-dessous.

*Exemple 2* : Dans cet exemple, un échantillon témoin constitué de 100% de copolymère de polypropylène, avec un indice de fluidité à l'état fondu, considéré comme étant de "qualité injection", adapté à l'injection de bouchons de bouteilles et de fermetures par l'industrie de l'emballage, a été moulé par injection en échantillons de forme haltère A1 pour des tests mécaniques. Des granulés de ce matériau ont également été mélangés au moyen d'une extrudeuse pour obtenir des granulés conditionnés. Cet exemple a été inclus dans le présent document uniquement à des fins de comparaison avec les exemples suivants. Les propriétés mécaniques et la courbe de comportement rhéo-fluidifiant à l'état fondu peuvent être trouvés dans le tableau 3 et le graphe ci-dessous. Les propriétés mécaniques et la viscosité de la masse fondue sont très différentes de celles de l'exemple 1, ce qui illustre l'écart que cette invention vise à combler entre les deux matériaux.

*Exemples 3 à 6* : Dans ces exemples, des mélanges de granulés d'un PET avec une viscosité IV de 0,8 dL/g (considéré comme étant un "grade bouteille" par l'homme de l'art), et d'un COPE avec une dureté Shore D de 25 (un exemple d'un tel produit est le Riteflex 425 de Celanese), dénommé COPE1 dans le tableau 3 ci-dessous, à un ratio allant de 1 à 30% en poids, comme indiqué dans le tableau 3, ont été produits. Les mélanges de granulés ont ensuite été séchés pendant 6h à 120°C, avant d'être moulés par injection en échantillons de forme haltère A1 pour les tests mécaniques. Les mélanges de granulés séchés ont également été mélangés au moyen d'une extrudeuse pour obtenir des granulés traités. Les propriétés mécaniques sont indiquées dans le tableau 3 ci-dessous. L'augmentation de la quantité de COPE dans les échantillons permet de régler les propriétés mécaniques du matériau et, dans le cas de l'exemple 6, de se rapprocher des propriétés de l'exemple 2 tout en obtenant une meilleure résistance à l'impact que les exemples 1 et 2. Par ailleurs, l'exemple 3 possède une résistance à l'impact notablement améliorée par rapport aux exemples 1 et 2, sans pour autant significativement modifier les autres propriétés mécaniques. Les exemples 4 à 5 démontrent une diminution notable du module de flexion et de la dureté, alors même que la quantité de COPE ajoutée reste inférieure à 15%. Les exemples 3 à 5 sont donc une illustration de la possibilité de choisir la composition du mélange polyester en fonction des besoins de l'application.

*Exemple 7 :* Dans cet exemple, un mélange de granulés d'un PET avec une viscosité IV de 0,8 dL/g (considéré comme "grade bouteille" par l'homme de l'art), et d'un COPE avec une dureté Shore D de 40 (un exemple d'un tel produit est le « Riteflex 640A » de Celanese), dénommé COPE2 dans le tableau 3 ci-dessous, à un ratio de 5% en poids, comme indiqué dans le tableau 3, a été produit. Les mélanges de granulés ont ensuite été séchés pendant 6h à 120°C, avant d'être moulés par injection en échantillons de forme haltère A1 pour les tests mécaniques. Les propriétés mécaniques et la courbe de comportement rhéo-fluidifiant à l'état fondu peuvent être trouvés dans le tableau 3 et le graphe ci-dessous. Cet exemple présente des propriétés proches de celles de l'exemple 4, tout en conservant une résistance à l'impact comparable à celle des exemples 1 et 2, ce qui le rend utile dans les applications où une résistance à l'impact plus faible est nécessaire. Les propriétés en flexion de l'exemple 7 se rapprochent de celles de l'exemple 4, avec une résistance à l'impact inférieure par rapport à l'exemple 1 et 2. Ces propriétés pourraient trouver leur intérêt dans des applications de dispositifs polyester ayant une fonction anti-effraction. Cet exemple présente en outre une viscosité à l'état fondu réduite par rapport à l'exemple 1, ce qui le rend plus facile à traiter par moulage par injection, en particulier dans le cas de composants à paroi mince.

*Exemple 8 :* Dans cet exemple, un mélange de granulés d'un **PET** avec une viscosité IV de 0,8 dL/g (considéré comme "grade bouteille" par l'homme de l'art), et de flocons d'un produit polytétrahydrofurane (PTMEG- un exemple de ce produit est le « Carbowax PEG 8000 » de Dow Chemical Company) de poids moléculaire 8000 g/mol à un ratio de 5% en poids, comme indiqué dans le tableau 3 ci-dessous ont été produites. Le mélange de granulés a ensuite été séché pendant 6h à 120°C, avant d'être moulé par injection en échantillons d'haltères A1 pour les tests mécaniques. Les propriétés mécaniques sont indiquées dans le tableau 3 ci-dessous. Cet exemple ne montre pas la modification des propriétés affichées par les exemples précédents, et prouve qu'un élastomère biphasé est nécessaire pour obtenir les résultats souhaités.

Cependant, l'ajout de 5% de PTMEG dans une matrice de PET a entraîné l'apparition d'un comportement d'adoucissement de la déformation en traction qui n'est pas observé sur les exemples 1 à 7, et qui pourrait être utilisé sur des composants fonctionnels travaillant à des taux de déformation plus élevés tels que des charnières vivantes ou des charnières de type film.

*Exemple 9* : Dans cet exemple, un mélange de granulés d'un PET avec une viscosité IV de 0,8 dL/g (considéré comme "grade bouteille" par l'homme de l'art), et d'un élastomère de polyuréthane TPU avec une dureté Shore A de 71 (un exemple d'un tel produit est le « Elastollan 1170 A 10 FC » de BASF) à un ratio de 5% en poids, comme indiqué dans le tableau 3 ci-dessous ont été produits. Les mélanges de granulés ont ensuite été séchés pendant 6h à 120°C, avant d'être moulés par injection en échantillons d'haltères A1 pour les tests mécaniques.

Dans les exemples 8 et 9, le COPE (1 ou 2) a été remplacé par le PTMEG et le TPU, respectivement. Il est à noter qu'une protection pourrait être recherchée pour une telle composition de polyester résultant du mélange de PET (ou similaire) et de PTMEG ou TPU. Une composition mélangeant du PET (ou similaire) et plusieurs composants parmi le COPE, le PTMEG et le TPU peut aussi être envisagée.

Les mélanges de granulés séchés ont également été mélangés au moyen d'une extrudeuse pour obtenir des granulés traités. Les propriétés mécaniques et la courbe de comportement rhéo-fluidifiant à l'état fondu peuvent être trouvés dans le tableau 3 et le graphe ci-dessous. Cet exemple a montré une diminution du module de flexion comparable aux exemples 4 et 7, et une faible résistance à l'impact. La viscosité de la masse fondue est également significativement réduite, ce qui en fait un très bon candidat pour la mise en œuvre par injection.

**Tableau 3 : Résumé de la composition et des propriétés mécaniques des exemples 1 à 9**

| **Exemple numéro** : | | 1 | 2 | 3 | 4 | 5 | 6 | 7 | 8 | 9 |
|---|---|---|---|---|---|---|---|---|---|---|
| Composition | | | | | | | | | | |
| Matériaux | % en masse | | | | | | | | | |
| PET | | 100 | - | 99 | 95 | 85 | 70 | 95 | 95 | 95 |
| PP Copolymère | | - | 100 | - | - | - | - | - | - | - |
| COPE 1 | | - | - | 1 | 5 | 15 | 30 | - | - | - |
| COPE 2 | | - | - | - | - | - | - | 5 | - | - |
| PTMEG | | - | - | - | - | - | - | - | 5 | - |
| TPU | | - | - | - | - | - | - | - | - | 5 |

| Mesures | | | | | | | | | | |
|---|---|---|---|---|---|---|---|---|---|---|
| Propriétés | Unités | | | | | | | | | |
| Densité | g/cm3 | 1,33 | 0,9 | 1,33 | 1,33 | 1,32 | 1,29 | 1,33 | 1,35 | 1,33 |
| Dureté | Shore D | 77 | 61 | 77 | 76 | 71 | 69 | 74 | 74 | 74 |
| Module De flexion | MPa | 2493 | 1300 | 2487 | 2224 | 1995 | 1489 | 2301 | 2465 | 2344 |
| Résistance à l'impact (sur barreau entaillé) | kJ/m² | 6,9 | 94 | 8,8 | 11 | 12,2 | 23,2 | 4,1 | 1,7 | 2,6 |

## Revendications

1. Dispositif de distribution destiné à être monté sur un récipient pour constituer un distributeur de produit fluide, le dispositif de distribution étant essentiellement constitué à partir d'une composition de polyester consistant essentiellement en un mélange des composants A et B définis comme suit :
A : un élastomère de copolyéther ester (COPE) constitué essentiellement de segments durs de polyester et de segments mous de polyéther aliphatique et ayant une dureté inférieure à 50 shore D, et
B : un polyéthylène téréphtalate (PET) ou un co-polyester, ou un mélange des deux.

2. Dispositif de distribution destiné à être monté sur un récipient pour constituer un distributeur de produit fluide, le dispositif de distribution étant exempt de polyoléfine et comprenant plusieurs éléments, au moins un élément étant essentiellement constitué à partir d'une composition de polyester consistant essentiellement en un mélange des composants A et B définis comme suit :
A : un élastomère de copolyéther ester (COPE) constitué essentiellement de segments durs de polyester et de segments mous de polyéther aliphatique et ayant une dureté inférieure à 50 shore D, et
B : un polyéthylène téréphtalate (PET) ou un co-polyester, ou un mélange des deux, tous les autres éléments étant réalisés à partir du composant A ou B.

3. Dispositif de distribution selon la revendication 1 ou 2, dans laquelle le co-polyester est obtenu par la polymérisation d'au moins un acide choisi parmi l'acide téréphtalique, l'acide 2,5-furandicarboxylique ou l'acide isophthalique avec un alcool choisi parmi l'éthylène glycol, le cyclohexanediméthanol, le triméthylène glycol et l'isosorbide, ou du recyclage d'un polymère composé de ces monomères.

4. Dispositif de distribution selon la revendication 1, 2 ou 3, dans laquelle le co-polyester est le polyéthylène téréphtalate modifié par un glycol (PETG).

5. Dispositif de distribution selon l'une quelconque des revendications précédentes, dans laquelle le co-polyester est choisi parmi le poly cyclohexylènediméthylène modifié par du téréphtalate de glycol (PCTG), le polycyclohexylène dimethylene téréphtalate modifié acide (PCTA), le Polyethylene co-Isosorbide Terephthalate (PEIT) et le polyéthylène furanoate (PEF).

6. Dispositif de distribution selon l'une quelconque des revendications précédentes, dans laquelle le composant A est présent dans un rapport massique de 0,5% à 40%, avantageusement de 1 % à 30 % et de préférence de 5 % à 15 %, et le composant B est présent dans un rapport massique de 60% à 99,5%, avantageusement de 70% à 99 % et de préférence de 85 % à 95 %.

7. Dispositif de distribution selon l'une quelconque des revendications précédentes, dans laquelle, dans le composant A, le segment dur du polyester est constitué d'unités de téréphtalate de butylène.

8. Distributeur de produit fluide comprenant un dispositif de distribution selon l'une quelconque des revendications précédentes.

9. Distributeur de produit fluide selon la revendication 8, comprenant un récipient réalisé à partir du composant B, sur lequel le dispositif de distribution est monté pour distribuer le produit fluide contenu dans le récipient.

10. Distributeur selon la revendication 9, dans lequel le récipient est réalisé en polyester, sur lequel le dispositif de distribution est monté pour distribuer le produit fluide contenu dans le récipient.

11. Distributeur selon la revendication 9, dans lequel le récipient est réalisé en polyoléfine, sur lequel le dispositif de distribution est monté pour distribuer le produit fluide contenu dans le récipient.

## Patentansprüche

1. Abgabevorrichtung, die dazu vorgesehen ist, an einem Behälter montiert zu werden, um einen Spender für flüssige Produkte zu bilden, wobei die Abgabevorrichtung im Wesentlichen aus einer Polyesterzusammensetzung besteht, die im Wesentlichen aus einem Gemisch von Komponenten A und B besteht, die wie folgt definiert sind:
A: ein Copolyetherester-Elastomer (COPE), das im Wesentlichen aus harten Polyestersegmenten und weichen aliphatischen Polyethersegmenten besteht und eine Härte aufweist, die kleiner als 50 Shore D ist, und
B: ein Polyethylenterephthalat (PET) oder ein Copolyester oder ein Gemisch von beiden.

2. Abgabevorrichtung, die dazu vorgesehen ist, an einem Behälter montiert zu werden, um einen Spender für ein flüssiges Produkt zu bilden, wobei die Abgabevorrichtung frei von Polyolefin ist und mehrere Elemente umfasst, wobei mindestens ein Element im Wesentlichen aus einer Polyesterzusammensetzung besteht, die im Wesentlichen aus einem Gemisch von Komponenten A und B besteht, die wie folgt definiert sind:
A: ein Copolyetherester-Elastomer (COPE), das im Wesentlichen aus harten Polyestersegmenten und weichen aliphatischen Polyethersegmenten besteht und eine Härte aufweist, die kleiner als 50 Shore D ist, und
B: ein Polyethylenterephthalat (PET) oder ein Copolyester oder ein Gemisch von beiden, wobei alle anderen Elemente aus der Komponente A oder B hergestellt sind.

3. Abgabevorrichtung nach Anspruch 1 oder 2, wobei der Copolyester durch Polymerisation mindestens einer Säure, die aus Terephthalsäure, 2,5-Furandicarbonsäure oder Isophthalsäure ausgewählt ist, mit einem Alkohol, der aus Ethylenglykol, Cyclohexandimethanol, Trimethylenglykol und Isosorbid ausgewählt ist, oder Recycling eines Polymers, das sich aus diesen Monomeren zusammensetzt, erhalten wird.

4. Abgabevorrichtung nach Anspruch 1, 2 oder 3, wobei der Copolyester Polyethylenterephthalat ist, das durch ein Glykol modifiziert ist (PETG).

5. Abgabevorrichtung nach einem der vorhergehenden Ansprüche, wobei der Copolyester aus Polycyclohexylendimethylen, das durch Glykolterephthalat modifiziert ist (PCTG), mit Säure modifiziertem Polycyclohexylendimethylenterephthalat (PCTA), Polyethylen-co-Isosorbidterephthalat (PEIT) und Polyethylenfuranoat (PEF) ausgewählt ist.

6. Abgabevorrichtung nach einem der vorhergehenden Ansprüche, wobei die Komponente A in einem Gewichtsverhältnis von 0,5 % bis 40 %, vorteilhaft von 1 % bis 30 % und vorzugsweise von 5 % bis 15 % vorliegt und die Komponente B in einem Gewichtsverhältnis von 60 % bis 99,5 %, vorteilhaft von 70 % bis 99 % und vorzugsweise von 85 % bis 95 % vorliegt.

7. Abgabevorrichtung nach einem der vorhergehenden Ansprüche, wobei das harte Polyestersegment in der Komponente A aus Butylenterephthalat-Einheiten besteht.

8. Spender für flüssige Produkte, umfassend eine Abgabevorrichtung nach einem der vorhergehenden Ansprüche.

9. Spender für flüssige Produkte nach Anspruch 8, umfassend einen Behälter, der aus der Komponente B hergestellt ist, an dem die Abgabevorrichtung montiert wird, um das flüssige Produkt abgegeben wird, das in dem Behälter enthalten ist.

10. Spender nach Anspruch 9, wobei der Behälter aus Polyester hergestellt ist, an dem die Abgabevorrichtung montiert wird, um das flüssige Produkt abgegeben wird, das in dem Behälter enthalten ist.

11. Spender nach Anspruch 9, wobei der Behälter aus Polyolefin hergestellt ist, an dem die Abgabevorrichtung montiert wird, um das flüssige Produkt abgegeben wird, das in dem Behälter enthalten ist.

## Claims

1. Dispensing device that is intended to be mounted on a container to form a dispenser for a fluid product, the dispensing device consisting essentially of a polyester composition consisting essentially of a mixture of components A and B which are defined as follows:
A: a copolyether ester elastomer (COPE) consisting essentially of hard segments of polyester and soft segments of aliphatic polyether and having a hardness of less than 50 Shore D, and
B: a polyethylene terephthalate (PET) or a copolyester, or a mixture of both.

2. Dispensing device that is intended to be mounted on a container to form a dispenser for a fluid product, the dispensing device being free from polyolefin and comprising a plurality of elements, at least one element consisting essentially of a polyester composition consisting essentially of a mixture of components A and B which are defined as follows:
A: a copolyether ester elastomer (COPE) consisting essentially of hard segments of polyester and soft segments of aliphatic polyether and having a hardness of less than 50 Shore D, and
B: a polyethylene terephthalate (PET) or a copolyester, or a mixture of both, all the other elements being made from component A or B.

3. Dispensing device according to claim 1 or 2, wherein the copolyester is obtained by polymerising at least one acid selected from terephthalic acid, 2,5-furandicarboxylic acid or isophthalic acid with an alcohol selected from ethylene glycol, cyclohexanedimethanol, trimethylene glycol and isosorbide, or by recycling a polymer composed of these monomers.

4. Dispensing device according to claim 1, 2 or 3, wherein the copolyester is glycol-modified polyethylene terephthalate (PETG).

5. Dispensing device according to any one of the preceding claims, wherein the copolyester is selected from glycol-modified polycyclohexylene dimethylene terephthalate (PCTG), acid-modified polycyclohexylene dimethylene terephthalate (PCTA), polyethylene-co-isosorbide terephthalate (PEIT), and polyethylene furanoate (PEF).

6. Dispensing device according to any one of the preceding claims, wherein component A is present in a weight ratio of 0.5% to 40%, advantageously 1% to 30%, and preferably 5% to 15%, and component B is present in a weight ratio of 60% to 99.5%, advantageously 70% to 99%, and preferably 85% to 95%.

7. Dispensing device according to any one of the preceding claims, wherein the hard segment of polyester in component A consists of butylene terephthalate units.

8. Dispenser for a fluid product, comprising a dispensing device according to any one of the preceding claims.

9. Dispenser for a fluid product according to claim 8, comprising a container made from component B, on which the dispensing device is mounted to dispense the fluid product contained in the container.

10. Dispenser according to claim 9, wherein the container is made from polyester, on which the dispensing device is mounted to dispense the fluid product contained in the container.

11. Dispenser for product according to claim 9, wherein the container is made from polyolefin, on which the dispensing device is mounted to dispense the fluid product contained in the container.
